# EUROPEAN PATENT SPECIFICATION

(11) **EP 1 835 766 B1**
(45) Date of publication and mention of the grant of the patent: **17.06.2009**
(21) Application number: 06753021.2
(22) Date of filing: 26.06.2006
(51) Int. Cl.: H04Q 3/00

(54) **METHOD FOR ENHANCING CONTROL ABILITY OF SERVICE CONTROL POINT**
VERFAHREN ZUR VERBESSERUNG DER KONTROLLFÄHIGKEIT EINES DIENSTKONTROLLPUNKTES
PROCÉDÉ D'AMÉLIORATION DE LA CAPACITÉ DE RÉGULATION DE POINT DE COMMANDE DE SERVICES

(30) Priority: 28.06.2005 CN 200510080063
(43) Date of publication of application: 19.09.2007
(73) Proprietor: Huawei Technologies Co., Ltd., Longgang District Shenzhen Guangdong 518129 (CN)
(72) Inventor: WU, Xiaojing Huawei Administration Building, Shenzhen,Guangdong 518129 (CN); XIA, Wenxin Huawei Administration Building, Shenzhen,Guangdong 518129 (CN)
(74) Representative: Goddar, Heinz J.
(86) International application number: PCT/CN2006/001446
(87) International publication number: WO 2007/000105

(56) References cited:
- WO-A-00/65848
- WO-A-99/34590
- CN-A- 1 166 908
- CN-A- 1 246 254
- US-B2- 6 744 871

## Description

### Field of the Invention

The present invention relates to the technical field of communications, in particular, to a method for enhancing control capability of Service Control Point (SCP).

### Background of the Invention

In an Intelligent Network (IN), a Service Control Point (SCP) is added to an existing switching network to realize the separation of switching and service controlling and provide value-added services. SCP is the core of an Intelligent Network, and is a control point of service logic and data in an Intelligent Network, wherein the service logic operates on the SCP. The SCP controls each IP call and intelligent call via connecting with a Service Switching Point (SSP). Each time when a call, such as an intelligent call, arrives, the SCP needs to communicate with the SSP via a Transaction Capabilities Application Part (TCAP), to send a corresponding operation to the SSP and to finish configuring the service logic, so that a call may be accomplished. The SCP may also receive a request from a Gateway (GW) or an SSP/GW (a GW module therein) and accomplish functions, such as certifying, authenticating, and charging. And each time when a call, such as an intelligent call, arrives, the SCP may also be connected with an SMP via TCP/IP and be administrated by the SMP. For an intelligent service, signaling switching needs to be performed many times between the SCP and the SSP from a user dialing to a call being established. The SSP is a connection point of the Public Switched Telephone Network (PSTN) and the Integrated Services Digital Network (ISDN) with the IN. And the SSP implements many functions, such as call control function, the intelligent service detection, the event reporting and the conversion for the message format, or the like. The SSP may be connected with the SCP via Signaling Network No.7, or may be connected with the SCP via a Signaling Access Unit (SAU).

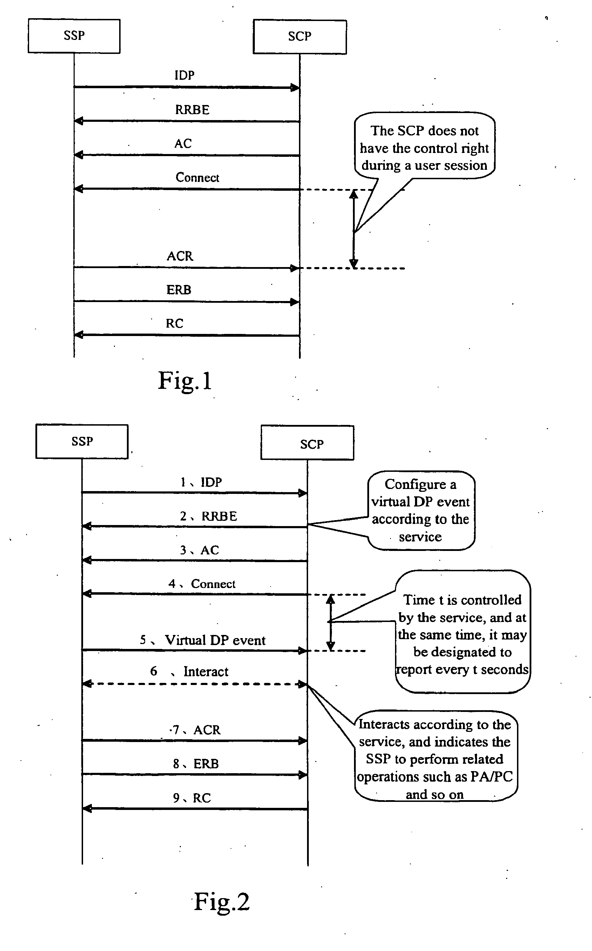

In the existing Intelligent Network service, the SCP interacts signaling with the SSP via intelligent network protocols, such as INAP, CAP and WIN protocols, so that flexibly call controlling may be realized and various differentiated services may be provided rapidly. Figure 1 is a schematic flow chart of a process in which an SCP interacts with an SSP during a call processing procedure of the prior art. Referring to Figure 1, the existing call processing procedure is as follows:

An SSP triggers an intelligent service, reports an Initial Detect Point (IDP) to an SCP, and requests the SCP to establish an intelligent call control relationship;

The SCP configures a virtual Detect Point (DP) event according to the service, and issues a RequestReportBCSMEvent (RRBE) to the SSP;

The SCP issues a charging request Apply Charging (AC) to the SSP to notify the SSP to be ready for charging;

The SCP issues a Connect message to the SSP to indicate the SSP to establish call connection;

The SSP sends an Apply Charging Report (ACR) message to the SCP;

The SSP reports an Event Report BCSM (ERB) to the SCP so as to report the call event, that is, to report to the SCP that the user has hung up; and

Finally, the SCP returns a Release Call (RC) message to the SSP to notify the SSP to release the resources, and the call is over.

It can be seen from the above call processing procedure that after a user initiates a session, the control right of the call transferred to the SSP, and the SCP regains the control right of the call only after the SSP monitors that the call changes from one state to another and reports the related Detection Point (DP) event. With the existing protocols, the SCP does not have the call control capability during a session or at a certain call state, such as playing prompting information during a call session, requesting user confirmation during a session and so on, and it is difficult to realize more abundant service features.
WO 99/34590 A provides a mechanism suitable for reporting recurrent events in intelligent networks, with the event mainly referring to the initial states of the changes in factors which affect call charging. In particular, according to the method disclosed in WO 99/34590 A, the SCP transmits a message RequestNotificationCharging to the SSP, notifying which events it is to report to the SCP. The SSP reports specific events and parameters (related to time) in a message EventNotificationCharging, which affect the call tariff and which are then recorded by the SCP for charging. The specific events include call on hook, handover, call hold, call transfer, temporary call drop and call re-establishment, and the like (refer to for example page 10, lines 14 - 20 of the description and to Figure 4), which are related to the state of the call and of the resources.
WO 00/65848 A discloses a method for controlling intelligent network services in an intelligent network. It is directed to solve the problems relating to MPC (Multiple Point of Control Support) in an intelligent network according to the CoreINAP (Intelligent Network Application Protocol) CS3 (Capability Set 3) (refer to, for example, page 3, lines 14 - 22 of the description), which is particularly applied in order to solve the problems related to the control of the interaction between multiple control point and multiple service logic programs. Specifically, in such an intelligent network, there may be several controlling connections to the SCP for one call state model. Therefore, it is not always appropriate to bind a detection point to a cause code value, since the used cause codes and detection points are fixed to each other. Then the intelligent network service cannot always use the cause codes it wants when releasing a call, because their use could cause an unwanted detection of a detection point. The method is based on the idea that, whenever necessary, a phase (phases) is (are) arranged to the call state model, in which phase the service switching point can select from two or more alternative routes or detection points to execute a certain operation (command). The detection point or branch to which the state model of the session is to be directed in each situation is added as its own parameter (information) to the operation (ReleaseCall or DisconnectLeg, for instance).

### Summary of the Invention

Some embodiments of the present invention provide a method for enhancing the control capability of Service Control Point (SCP), so that the SCP may obtain the call control right during a session.

The method for enhancing control capability of SCP according to some embodiments of the present invention, including: configuring, by the SCP, a detection point event and setting time conditions under which an SSP reports the detection point event, such detection point event hereafter being referred to as a virtual detection point event; monitoring, by the SSP, a call and reporting the virtual detection point event when the conditions to report the virtual detection point event are met; and performing, by the SCP, a call control via interacting with the SSP after receiving the report of the virtual detection point event.

Preferably, the process of configuring a virtual detection point event by the SCP includes: issuing, by the SCP, a RequestReportBCSMEvent (RRBE) to the SSP.

More preferably, the SCP issues a message carrying the service type parameter and time parameter of the virtual detection point event to the SSP, so that the SSP is capable of reporting the virtual detection point event according to the service type parameter and time parameter.

The method further includes: monitoring, by the SSP, a call and reporting the virtual DP (detection point) event to the SCP when the call meets the conditions of the service type parameter and time parameter carried in the RRBE.

Preferably, the setting conditions under which an SSP reports the virtual DP event includes: reporting the DP event after a call session is initiated for a predetermined time; or reporting the DP event recurrently according to a predetermined time period after the call session is initiated.

The call control performed by the SCP after the SSP reports the virtual event includes operations of PlayAnnouncement, PromptAndCollectUser and charging.

A system for call controlling , including: a SCP, adapted to control a call session via interacting with a SSP after receiving a DP event reported by the SSP; wherein the SCP is capable to configure the DP event and set time conditions for a SSP to report the DP event, such detection point event being referred to as a virtual detection point event.

Therefore, in the prior art, the SCP does not have the call control capability during a session or in a certain call state specified by the related protocols; however, according to an embodiment of the present invention, the SCP configures the time to report a DP event using a DP event report mechanism according to the service, and the SCP configures a virtual DP event and sets the conditions under which an SSP reports a virtual DP event, so that the SSP reports a virtual DP event after a session is initiated for a predetermined time, and the SCP interacts with the SSP for call control after the SCP receives the reported DP event. The SCP controls the SSP to report via the DP event according to requirement of the service, so that call control right may be obtained and the control capability of the SCP during a user session may be enhanced. According to an embodiment of the present invention, the SCP may flexibly configure the time to report a DP event during a call, so that functions such as PalyAnnouncement, PromtAndCollectUserInformation, charging and so on during a session may be realized so as to provide value-added services.

### Brief Description of the Drawings

Figure 1 is a schematic flow chart of a process in which a Service Control Point (SCP) interacts with a Service Switching Point (SSP) during a call processing procedure of the prior art; and

Figure 2 is an exemplary schematic flow chart of a process in which an SCP interacts with an SSP during a call processing procedure according to an embodiment of the present invention.

### Detailed Description of the Embodiments

To enhance the control capability of Service Control Point (SCP) during a session, in an embodiment of the present invention, a virtual Detection Point (DP) event is configured on a Service Switching Point (SSP) according to the service, and conditions under which the SSP reports the virtual DP event are designated. The conditions may be time, for example, the SSP is designated to report the DP event at a "specific time". The "specific time" may be n seconds after a session is initiated, or may be every n seconds after a session is initiated. The time condition may also be: to report the virtual event n seconds after a specific event occurs, or to report the virtual event once every n seconds after a specific event occurs, wherein n is designated according to the service. For example, the virtual event is reported 10 seconds after a session between the calling and the called parties is initiated according to the service.

After a virtual DP event is configured, the SSP monitors the call and reports the virtual DP event when the conditions are met. The SCP interacts signaling with the SSP after receiving the virtual DP event, and performs functions such as PlayAnnouncement, PromptAndCollectUserlnformation, charging and so on during a session so as to provide value-added services.

The similarity between the virtual DP event report of an embodiment of the present invention and the existing DP event report lies in that the SSP is made to suspend the call processing via event report, so that the SCP can control the subsequent call processing. But in an embodiment of the present invention, the SCP may configure the report condition flexibly according to the service, that is, the condition to report the virtual DP event is different from that of the DP event in the prior art, so it is referred as virtual DP event. The SSP reports the virtual DP event according to the service configured by the SCP, so that the SCP may obtain the call control right.

In an embodiment of the present invention, the SCP may configure a virtual DP event using the existing protocols, or using new protocols agreed on between the SSP and the SCP. In this embodiment, the SCP utilizes and expands a RequestReportBCSMEvent (RRBE) requesting to report a Basic Call State Model (BCSM) event in INAP protocols.

In the prior art, the RRBE is issued to the SSP by the SCP for requesting the SSP to configure a DP dynamically. In an intelligent network system, the SSP divides all the calls into relatively stable states, and the calls are switched among these states. A DP is a transition point where a call switches from one state to another. The DP is configured dynamically, that is, the SCP notifies the SSP to report the call event to the SCP when a call switches from one state to another. The SSP monitors the call state and reports the call event to the SCP when the call state changes.

The specific parameters of the existing RRBE includes several related DPs and report conditions of these DPs, and the like, such as DP4 (the condition is Route Detection Failed), DP5 (the condition is Called Party Busy), DP6 (the condition is Called Party No Reply), DP9 (the condition is Calling party Or Called Party Hangs Up), and DP10 (the condition is Calling Party Premature Release). The SCP issues a RRBE to the SSP for requesting the SSP to configure a DP event according to related parameters, and to report the DP event to the SCP when the event occurs.

In an embodiment of the present invention, taking time used as a condition to report the virtual DP event as an example, the specific parameters of RRBE is expanded, including service type and time parameter n seconds. Wherein, the service type refers to way to report a virtual event. For example, Service Type 1 means that the virtual DP event is reported n seconds after a session is initiated; Service Type 2 means that the virtual DP event is reported every n seconds after a session is initiated, and so on. According to the service, the SCP configures a virtual DP event by setting service type parameter value and time parameter value in a RRBE.

As shown in Figure 2, the process in which an SCP controls a call during a session by configuring a virtual DP event is as follows.

S1: an SSP triggers an intelligent service, reports the Initial Detect Point (IDP) to an SCP, and requests the SCP to establish an intelligent call control relationship, wherein the parameters of the operation include service key, calling number, called number and so on;

S 2: the SCP configures a virtual DP event according to the service and issues a RRBE to the SSP, the RRBE carries the service type parameter and time parameter configured according to the service;

S 3: the SCP issues a charging request Apply Charging (AC) to the SSP and notifies the SSP to be ready for charging, the request including the charging party and other information related to charging;

S 4: the SCP issues an Connect operation message to the SSP and indicates the SSP to establish a call connection;

S 5: the SSP monitors the call according to the parameters carried in the RRBE issued by the SCP during a call process, and reports the virtual DP event when conditions of reporting the virtual DP event is met. For example, the service type parameter is 1 and the time parameter is 20 seconds , which means that, the virtual DP event is reported 20 seconds after a session is initiated; the SSP monitors the call after the call session is initiated, and reports the virtual DP event when reaching 20 seconds;

S 6: the SCP interacts according to the service after it receives the reported virtual DP event, and indicates the SSP to perform related operations such as PlayAnnouncement without PromptAndCollectUserInformation or PlayAnnouncement with PromptAndCollectUserInformation;

S 7: the SSP sends a message Apply Charging Report (ACR) to the SCP, wherein the parameters contained in the ACR include session initiating time, session terminating time, calling party, called party, charging party and so on;

S 8: the SSP reports an Event Report BCSM (ERB) to the SCP so as to report the call event, that is, to report to the SCP that the user has hung up; and

S 9: the SCP returns an operation message Release Call (RC) to the SSP so as to notify the SSP to release the resources, and the call is disconnected.

In embodiments of the present invention, the SCP may be made to obtain the call control right and indicate the SSP to perform related operations according to the service after a session is initiated.

A virtual DP event may be configured flexibly according to the service. The SCP may designate the SSP to report the virtual DP event or not, may designate the SSP to report the DP event after a session is initiated for a predetermined time, or may designate the SSP to report the DP event recurrently according to a predetermined time period after a session is initiated, and so on.

After the SCP receives the virtual DP event, the SCP may designate the SSP to perform operations such as PlayAnnoucement, PromptAndCollectUserInformation, charge adjusting and so on, and the user session will not be interrupted during the above operations.

While the present invention has been illustrated and described with reference to some preferred embodiments, the present invention is not limited to these. Those skilled in the art should recognize that various variations and modifications can be made without departing from the scope of the present invention as defined by the accompanying claims.

## Claims

1. A method for enhancing control capability of Service Control Point, comprising:
Configuring (2), by the Service Control Point, a detection point event and setting time conditions under which a Service Switching Point reports the detection point event, such detection point event hereafter being referred to as a virtual detection point event;
monitoring, by the Service Switching Point, a call and reporting (5) the virtual detection point event when the conditions to report the virtual detection point event are met; and
performing, by the Service Control Point, a call control via interacting (6) with the Service Switching Point after receiving the report of the virtual detection point event.

2. The method according to claim 1, wherein the process of configuring (2) a virtual detection point event by the Service Control Point comprises: issuing, by the Service Control Point, a RequestReportBCSMEvent to the Service Switching Point.

3. The method according to claim 2, further comprising: issuing, by the Service Control Point, a message carrying the service type parameter and time parameter of the virtual detection point event to the Service Switching Point, so that the Service Switching Point is capable of reporting the virtual detection point event according to the service type parameter and time parameter.

4. The method according to claim 3, further comprising: monitoring, by the Service Switching Point, a call and reporting (5) the virtual detection point event to the Service Control Point when the call meets the conditions of the service type parameter and time parameter carried in the RequestReportBCSMEvent.

5. The method according to claim 1, wherein the process of setting conditions under which a Service Switching Point reports the virtual detection point event comprises:
reporting (5) the virtual detection point event after a call session is initiated for a predetermined time; or reporting (5) the virtual detection point event recurrently according to a predetermined time period after the call session is initiated.

6. The method according to claim 1, wherein the process of call controlling performed by the Service Control Point after the Service Switching Point reports the virtual detection point event comprises operations of PlayAnnouncement, PromptAndCollectUserInformation and charging.

7. A system for call controlling, comprising:
a Service Control Point, adapted to control a call session via interacting with a Service Switch Point after receiving a detection point event reported by the Service Switch Point,
wherein the Service Control Point is capable to configure the detection point event and set time conditions for a Service Switching Point to report the detection point event, such detection point event being referred to as a virtual detection point event.

## Patentansprüche

1. Verfahren zur Verbesserung der Kontrollfähigkeit eines Dienstkontrollpunktes, das aufweist:
Auslegen (2), mittels des Dienstkontrollpunktes, eines Bestimmungspunktereignisses sowie Festsetzen von Zeitbedingungen, unter welchen ein Dienstschaltpunkt das Bestimmungspunktereignis anzeigt, wobei ein solches Bestimmungspunktereignis im Folgenden als virtuelles Bestimmungspunktereignis bezeichnet wird;
Überwachen, mittels des Dienstschaltpunktes, eines Anrufs und Anzeigen (5) des virtuellen Bestimmungspunktereignisses, wenn die Voraussetzungen zum Anzeigen des virtuellen Bestimmungspunktereignisses vorliegen; und
Durchführung, mittels des Dienstkontrollpunktes, einer Anrufkontrolle durch Zusammenwirken (6) mit dem Dienstschaltpunkt nach dem Empfangen der Anzeige über das virtuelle Bestimmungspunktereignis.

2. Verfahren nach Anspruch 1, bei dem der Schritt des Auslegens (2) eines virtuellen Bestimmungspunktereignisses mittels des Dienstkontrollpunktes umfasst: Ausgeben, mittels des Dienstkontrollpunkts, eines RequestReportBCSMEvent an den Dienstschaltpunkt.

3. Verfahren nach Anspruch 2, das weiterhin aufweist: Ausgeben, mittels des Dienstkontrollpunktes, einer Nachricht, die die Dienstartparameter und Zeitparameter des virtuellen Bestimmungspunktereignisses zu dem Dienstschaltpunkt transportiert, so dass der Dienstschaltpunkt in der Lage ist, das virtuelle Bestimmungspunktereignis entsprechend den Dienstartparametern und Zeitparametern anzuzeigen.

4. Verfahren nach Anspruch 3, das weiterhin aufweist: Überwachen, mittels des Dienstschaltpunktes, eines Anrufs und Anzeigen (5) des virtuellen Bestimmungspunktereignisses dem Dienstkontrollpunkt, wenn der Anruf die Voraussetzungen der Dienstartparameter und der Zeitparameter, die in dem RequestReportBCSMEvent transportiert werden, erfüllt.

5. Verfahren nach Anspruch 1, bei dem der Schritt des Festsetzens der Voraussetzungen, unter welchen ein Dienstschaltpunkt das virtuelle Bestimmungspunktereignis anzeigt, umfasst:
Anzeigen (5) des virtuellen Bestimmungspunktereignisses, nachdem eine Anrufsitzung für eine vorbestimmte Zeit gestartet worden ist; oder wiederholtes Anzeigen (5) des virtuellen Bestimmungspunktereignisses gemäß einem vorbestimmten Zeitabschnitt, nachdem die Anrufsitzung gestartet worden ist.

6. Verfahren nach Anspruch 1, bei dem der Schritt der Anrufkontrolle, die von dem Dienstkontrollpunkt durchgeführt wird, nachdem der Dienstschaltpunkt das virtuelle Bestimmungspunktereignis anzeigt, die Vorgänge PlayAnnouncement, PromptAndCollectUserInfformation sowie Aufladen umfasst.

7. System für die Anrufkontrolle, das aufweist:
einen Dienstkontrollpunkt, der darauf ausgelegt ist, eine Anrufsitzung durch Zusammenwirken mit einem Dienstschaltpunkt zu kontrollieren, nach dem Empfangen eines Bestimmungspunktereignisses, das von dem Dienstschaltpunkt angezeigt worden ist,
wobei der Dienstkontrollpunkt in der Lage ist, das Bestimmungspunktereignis und die festgesetzten Zeitvoraussetzungen für einen Dienstschaltpunkt auszulegen, um das Bestimmungspunktereignis anzuzeigen, wobei ein solches Bestimmungspunktereignis als ein virtuelles Bestimmungspunktereignis bezeichnet wird.

## Revendications

1. Procédé permettant d'améliorer la capacité de commande d'un point de commande de services comprenant :
l'opération, par le point de commande de services, consistant à configurer (2) un événement de point de détection et à établir les conditions temporelles en vertu desquelles un point de commutation de services signale l'événement de point de détection, un tel événement de point de détection étant désigné ci-après dans le présent document par l'expression "événement de point de détection virtuel" ;
l'opération, par le point de commutation de services, consistant à surveiller un appel et à signaler (5) l'événement de point de détection virtuel lorsque les conditions pour signaler l'événement de point de détection virtuel sont réunies ; et
l'opération, par le point de commande de services, consistant à exécuter un contrôle d'appel par l'intermédiaire d'une interaction (6) avec le point de commutation de services après avoir reçu le rapport de l'événement de point de détection virtuel.

2. Procédé selon la revendication 1, le processus de configuration (2) d'un événement de point de détection virtuel par le point de commande de services comprenant : l'envoi, par le point de commande de services, d'un "RequestReportBCSMEvent" vers le point de commutation de services.

3. Procédé selon la revendication 2, comprenant en outre : l'envoi, par le point de commande de services, d'un message qui achemine le paramètre du type de service et le paramètre temporel de l'événement de point de détection virtuel vers le point de commutation de services, de sorte que le point de commutation de services soit capable de signaler l'événement de point de détection virtuel en fonction du paramètre du type de service et du paramètre temporel.

4. Procédé selon la revendication 3, comprenant en outre : la surveillance, par le point de commutation de services, d'un appel et l'opération consistant à signaler (5) l'événement de point de détection virtuel au point de commande de services lorsque l'appel satisfait aux conditions exigées par le paramètre du type de service et le paramètre temporel acheminés dans le "RequestReportBCSMEvent".

5. Procédé selon la revendication 1, le processus d'établissement de conditions en vertu duquel un point de commutation de services signale l'événement de point de détection virtuel comprenant l'opération consistant à signaler (5) l'événement de point de détection virtuel une fois qu'une session d'appel a été lancée pendant une durée prédéterminée ; ou à signaler (5) l'événement de point de détection virtuel de façon récurrente en fonction d'un intervalle de temps prédéterminé une fois que la session d'appel a été lancée.

6. Procédé selon la revendication 1, le processus de commande des appels effectué par le point de commande de services, une fois que le point de commutation de services signale l'événement de point de détection virtuel, comprenant les opérations suivantes : PlayAnnouncement, PromptAndCollectUserInformation et facturation.

7. Système de commande d'appels comprenant :
un point de commande de services, lequel est conçu pour contrôler une session d'appel grâce à l'interaction avec un point de commutation de services après avoir reçu un événement de point de détection signalé par le point de commutation de services,
cas dans lequel le point de commande de services est capable de configurer l'événement de point de détection et d'établir des conditions temporelles pour un point de commutation de services afin de signaler l'événement de point de détection, un tel événement de point de détection étant désigné par l'expression "événement de point de détection virtuel".
